# FASCICULE DE BREVET EUROPEEN

(11) **EP 0 744 093 B1**
(45) Date de publication et mention de la délivrance du brevet: **10.12.1997**
(21) Numéro de dépôt: 95908838.6
(22) Date de dépôt: 10.02.1995
(51) Int. Cl.: H02J 5/00, G05D 1/03

(54) **SYSTEME D'ALIMENTATION DE ROBOTS MOBILES AUTONOMES**
STROMVERSORGUNGSSYSTEM FUR SELBSTANDIGE BEWEGLICHE ROBOTER
POWER SUPPLY SYSTEM FOR SELF-CONTAINED MOBILE ROBOTS

(30) Priorité: 11.02.1994 BE 9400171
(43) Date de publication de la demande: 27.11.1996
(73) Titulaire: Solar and Robotics S.A., 1180 Bruxelles (BE)
(72) Inventeur: COLENS, André, B-1330 Rixensart (BE)
(74) Mandataire: Colens, Alain
(86) Numéro de dépôt international: BE9500013
(87) Numéro de publication internationale: WO9522191

(56) Documents cités:
- WO-A-91/10947
- WO-A-92/17929
- US-A- 4 777 416
- US-A- 5 258 755
- PATENT ABSTRACTS OF JAPAN vol. 16, no. 97 (E-1176) (5140) 10 Mars 1992 & JP,A,03 277 132 (SHINKO ELECTRIC CO) 9 Décembre 1991
- PATENT ABSTRACTS OF JAPAN vol. 17, no. 645 (M-1517) (6274) 30 Novembre 1993 & JP,A,05 207 603 (DAIFUKU CO) 13 Août 1993

## Description

La présente invention concerne un système et dispositif d'orientation et d'alimentation énergétique pour robots mobiles autonomes.

Pour qu'un robot mobile soit complètement autonome, il faut qu'il puisse s'alimenter par lui-même à une source d'énergie.

Une solution à ce problème, si le robot est actif à ciel ouvert, est d'utiliser la lumière ambiante convertie en électricité au moyen de cellules photovoltaïques placées sur les faces éclairées de l'engin. L'électricité ainsi produite peut être consommée immédiatement ou stockée dans une batterie rechargeable. Ceci libère le robot des contraintes de ravitaillement en énergie.

Le système à cellules photovoltaïques limite cependant l'utilisation du robot à une consommation énergétique faible et à un usage extérieur qui le rend dépendant des conditions d'ensoleillement.

D'autres solutions ont été envisagées dans le cadre de remplissage automatique de réservoir de carburant pour des engins à moteur thermique. La connection automatique au réseau électrique pour la recharge de batterie d'un engin à moteur électrique a également été envisagée.

Ces solutions nécessitent un positionnement précis du robot et une connection physique au système de recharge ou de remplissage.

La localisation par le robot du point de ravitaillement nécessite également un système de guidage relativement complexe, p.e. à l'aide de fils électriques.

Le brevet US 4,777,416 divulgue un robot mobile autonome apte à rejoindre automatiquement une station de recharge lorsque le niveau de charge d'une batterie rechargeable descend en dessous d'une valeur prédéterminée. Le positionnement de pareil robot est cependant déterminé à tout moment et le déplacement vers une station de recharge s'effectue selon un chemin déterminé. Pareil système est compliqué et exige des calibrations de positionnement fréquents. De plus, dans ce document, une connexion physique est requise pour la recharge, en particulier au moyen d'un bras retractable.

L'invention vise à surmonter ces difficultés et ces désavantages, en proposant un système de réapprovisionnement énergétique pour engin mobile autonome tel que défini dans la revendication indépendante 1.

Selon un mode particulier de l'invention, on propose un robot mobile autonome capable de se réapprovisionner en énergie sans devoir se connecter physiquement à la source d'approvisionnement, en ne nécessitant pas de positionnement précis et en utilisant la source elle-même comme système de repérage et de guidage pour le réapprovisionnement en énergie.

En fonctionnement normal, le robot se déplace dans sa zone de travail dont les limites, p.e. déterminées par des obstacles ou un fil métallique, sont détectées de manière connues par des capteurs appropriés situés sur ou dans le robot.

Selon un mode particulier de l'invention le robot mobile et autonome est muni d'un ordinateur et d'un circuit qui mesure l'intensité d'un champ oscillant produit par la source d'énergie elle-même. Les mesures d'intensité sont envoyées à l'ordinateur qui applique un algorithme particulier, pour donner les instruction nécessaires aux organes commandant le déplacement de l'engin. Sur la base de la variation d'intensité lors de son parcours, le robot selon l'invention peut se diriger vers la source d'alimentation si une recharge énergétique s'avère nécessaire.

Le système d'alimentation comprend une station fixe ou essentiellement fixe avec un générateur de courant alternatif HF connecté d'une part à une source de courant électrique, p.e. le réseau public 220V ou une unité à panneaux photovoltaïques couplé à une batterie rechargeable, et d'autre part à une boucle d'induction placée sur ou dans le sol. Ce générateur peut fonctionner en permanence avec une perte très faible si aucune source de courant induit, p.e. sous la forme d'une masse métallique, ne se trouve à proximité. La fréquence peut varier de 5 à 100 KHz, de préférence de 10 à 30 KHz, p.e. 20 KHz. La boucle d'induction mesure de 5 à 100 cm, plus typiquement de 10 à 20 cm de diamètre.

Le robot est par ailleurs équipé d'une bobine réceptrice placée dans sa partie inférieure et d'un circuit récepteur accordé sur la fréquence du courant alternatif du système fixe d'alimentation.

Le robot est muni d'un dispositif de filtrage et de redressement du courant induit capté par la bobine réceptrice, dispositif permettant la recharge d'une batterie. Ces dispositifs sont connus en soi.

Lorsque la recharge est terminée, l'algorithme de travail spécifique au robot reprend le relais jusqu'à nouvel épuisement de la batterie de recharge.

Le système selon l'invention peut s'appliquer de différentes façons.

Selon un premier mode de réalisation, le plan de la boucle d'induction est perpendiculaire par rapport au plan de déplacement de l'engin.

La boucle réceptrice est placée à l'avant de l'engin mobile. L'axe de la boucle se trouve sur l'axe de déplacement de l'engin.

L'engin contient un ordinateur qui analyse entre autres les paramètres de charge d'une batterie rechargeable, p.e. une batterie Ni/Cd 12V 2 A/h. Lorsque celle-ci doit être réalimentée, p.e. lorsque la charge est de 30% de sa valeur nominale (moins de 600 mA/h), un algorithme particulier prend en charge les déplacements de l'engin.

Selon l'algorithme, l'engin effectue une rotation de 360° sur lui-même. La tension aux bornes de la bobine réceptrice passera alors par un maximum lorsque l'axe de la machine (et de la bobine) se trouvent dans la direction du générateur à induction.

L'engin se déplacera selon cet axe, aléatoirement, soit dans la direction de la source soit dans la direction opposée. Dans ce dernier cas, le gradient détecté est négatif et l'algorithme prévoit alors une rotation de 180° ce qui amène inévitablement l'engin sur la trajectoire adéquate pour se rapprocher de la source émettrice qui est aussi la source d'alimentation énergétique.

Le signal provenant de la bobine réceptrice est constamment analysé par l'ordinateur se trouvant à bord de l'engin qui agit sur les roues motrices de manière à diriger la machine vers le générateur, en se basant sur le gradient du signal émis. La machine s'arrête lorsque le signal reçu est suffisant pour assurer la recharge de la batterie.

Selon un second mode de réalisation de l'invention, le plan de la boucle d'induction se trouve dans le plan de déplacement de l'engin. La boucle d'induction peut être posée sur le sol ou placée en dessous de la surface de déplacement, de préférence dans un endroit dégagé par rapport aux obstacles susceptibles d'être présent sur la surface de déplacement de l'engin.

La boucle réceptrice est placée en dessous de l'engin mobile dans le plan de déplacement de l'engin, de préférence le plus près possible du sol (quelques centimètres). Lorsque l'engin se déplace en direction du générateur, la machine coupe les lignes équipotentielles de l'émission perpendiculairement à celles-ci et le champ se renforce d'autant plus vite que la machine est plus près du générateur. Si la direction n'est pas perpendiculaire aux lignes équipotentielles, le gradient diminuera inévitablement à un moment donné.

Lorsque l'engin se déplace parallèlement aux lignes d'égale intensité, le champ reste pratiquement constant, la variation éventuelle étant inférieure au bruit de fond. L'ordinateur analyse la valeur absolue du champ et son gradient en fonction de l'avancement de l'engin, l'ordinateur peut diriger l'engin vers le générateur et l'arrêter lorsque le champ est maximum.

Ainsi lorsque, l'engin étant en mouvement, le champ mesuré à intervalle de temps donné est pratiquement constant (gradient inférieur à une valeur prédéterminée), l'algorithme prévoit de faire faire une rotation de 90° à l'engin d'un côté ou de l'autre. Si le gradient qui est alors mesuré est négatif, l'engin fait une deuxième rotation, cette fois de 180°, le gradient étant alors positif jusqu'à un maximum prédéterminé où se trouve le générateur, ou jusqu'à un minimum (valeur constante) lorsqu'il est tangent à une ligne de force. Ce second cas se produira le plus souvent étant donné l'imprécision des mesures de champs , et accessoirement des rotations effectuées et des trajectoires suivies. Dans ce cas une nouvelle rotation de 90° est effectuée et le cycle peut reprendre jusqu'à une valeur du champ prédéterminée. En pratique l'engin arrive donc sur la station de réapprovisionnement par approximations successives.

Dans les modes de réalisation susmentionnés, l'algorithme tient bien sûr compte d'autres facteurs tels les signaux de limite etc.. qui ont priorité sur l'algorithme simplifié décrit ci-dessus.

Selon une variante particulièrement avantageuse de l'invention, l'engin ne se trouve pas constamment dans la zone d'influence de la source énergétique. Celle-ci dans la plupart des cas en effet est limitée en pratique à une distance de 10 à 30 mètres, typiquement environ 20 mètres. La zone de travail peut être avantageusement plus étendue. Lorsque l'engin se situe hors de la zone d'influence du champ émis par la source énergétique, c'est à dire lorsque les limites de la zones de travail sont situées au delà de la zone d'influence , un algorithme approprié intervient si une recharge est nécessaire. L'engin se déplace alors de manière aléatoire à la recherche de la zone d'influence susmentionnée, en limitant éventuellement sa consommation à celle strictement nécessaire pour son déplacement. Ainsi dans le cas d'une tondeuse à gazon, l'engin parcours la surface de travail jusqu'à ce qu'il pénètre dans la zone d'influence de la source énergétique, ce qui enclenche l'algorithme d'approche décrit ci-dessus. Dans l'étape de recherche de la zone d'influence, le moteur de coupe ne fonctionne pas pour économiser l'énergie et ainsi assurer une autonomie optimale à l'engin. Le niveau de charge minimum pour enclencher le processus de recherche et l'algorithme de recherche aléatoire est choisi de manière telle que statistiquement, l'engin retrouvera la zone d'influence de la source énergétique avant épuisement complet de sa batterie rechargeable. Le degré de certitude peut être contrôlé en fonction du type de travail auquel l'engin est destiné.

Lors de l'étape de recharge, afin d'obtenir un transfert optimum de puissance de la bobine émettrice vers la bobine réceptrice, le positionnement exact de l'engin mobile par rapport au système d'alimentation par induction fait appel à une combinaison de deux mesures :
- une mesure du champ induit A1 (racine carrée de la mesure du champ induit) dans la bobine réceptrice effectuée au moyen d'un circuit sélectif, à haut gain, centré sur la fréquence d'oscillation du circuit d'alimentation, permettant de mesurer le signal à grande distance (plusieurs dizaines de mètres)
- une mesure du courant de charge A2 fournie par la bobine réceptrice.

Le courant de charge ne devient mesurable que lorsque les deux bobines sont très proches l'une de l'autre c'est-à-dire que le décentrage de l'une par rapport à l'autre ne dépasse pas leur diamètre.

L'ordinateur de l'engin tient compte d'une combinaison de A1 et de A2 pour estimer la valeur absolue A= A1 + A2 du champ.

La combinaison des deux mesures permet à la fois une détection à grande distance et un positionnement précis pour la superposition des deux bobines.

Le gradient du champ, c'est à dire sa variation sur une certaine distance, est inversément proportionnel au carré de la distance qui sépare l'engin mobile de la source d'alimentation.

De manière à avoir une résolution uniforme quelle que soit la distance de l'engin à la source d'alimentation, les mesures de champ se font sur une distance d'autant plus grande que l'éloignement de l'engin par rapport à la source est important.

Par exemple si

| | | | |
|---|---|---|---|
| si | A=10 | d = 1m | (loin de la source, environ 10 mètres) |
| | A=100 | d = 10cm | (près de la source, environ 1 mètre) |
| | A=350 | d = 3cm | (les deux bobines sont partiellement superposées, non centrées) |

Le système susmentionné peut être avantageusement appliqué à une tondeuse à gazon robotique autonome. Tous les éléments de guidage non associés au réapprovisionnement électrique peuvent être identiques à ceux décrits dans la demande de brevet PCT/BE91/00068 plus particulièrement relative à une tondeuse à gazon solaire. La fréquence utilisée pour le système de détection des limites devra alors être suffisamment différente de celle utilisée pour la recharge par induction.

Avantageusement le détecteur de limite est désactivé à partir d'une certaine mesure du champ induit, c'est à dire à partir d'une certaine distance à l'unité de recharge.

Dans le cas d'une tondeuse à gazon, il est bien entendu que l'algorithme pourra être adapté de façon à pouvoir s'adapter à des configurations complexes des limites de la pelouse par rapport à la station fixe. Ainsi, il peut se présenter que le robot soit séparé de la station fixe par un espace ne faisant pas partie de sa zone de travail autorisée. Le détecteur de limite aura bien sûr priorité sur la procédure d'approche vers la station fixe. Dans ce cas on peut par exemple prévoir que le robot suive la limite, en réalisant à intervalle régulier des test de répérage de la station fixe, jusqu'au moment où la trajectoire vers celle-ci ne se trouve plus coupée par une limite de surface de travail.

Toujours pour une tondeuse à gazon, la boucle réceptrice horizontale peut se trouver en dessous du disque de coupe, de façon à être le plus près possible de la boucle émettrice lors de la recharge, en améliorant ainsi l'efficacité de la recharge.

L'invention peut s'appliquer tout aussi avantageusement à divers autres robots domestiques ou industriels, p.e. robots aspirateurs, robots de surveillance et robots de manutention. Un engin de surveillance robotique peut comprendre par exemple un détecteur de fumée et/ou des capteurs acoustiques.

Dans certaines circonstances, p.e. sur site industriel, il peut être avantageux d'ajouter un système de repérage par émetteur - capteur infra-rouge pour des localisations particulières de l'engin robotique. Il en est ainsi si le sol s'avère trop perturbateur vis à vis du champ induit, p.e. s'il comporte une armature en acier. Un émetteur I.R. multidirectionnel de puissance appropriée p.e. de portée jusqu'à 50 mètres peut ainsi être prévu à ou à proximité de la station de recharge, le récepteur correspondant étant monté sur l'engin. Ces émetteurs et les détecteurs associés sont bien connus.

Le système proposé selon l'invention convient pour la recharge automatique d'engins autonomes dans des gammes de puissance de quelques watts à plusieurs kilowatts.

L'invention sera mieux comprise à l'examen des dessins en annexe donnés à titre d'exemple seulement dans lesquels :
la fig. 1 représente le circuit de la station fixe d'alimentation et le circuit complémentaire de l'engin mobile
la fig. 2 est un schéma électronique représentant un circuit oscillant émetteur tel qu'utilisé selon le dispositif de la fig. 1
la fig. 3 illustre l'algorithme de répérage utilisé dans le second mode de réalisation de l'invention.

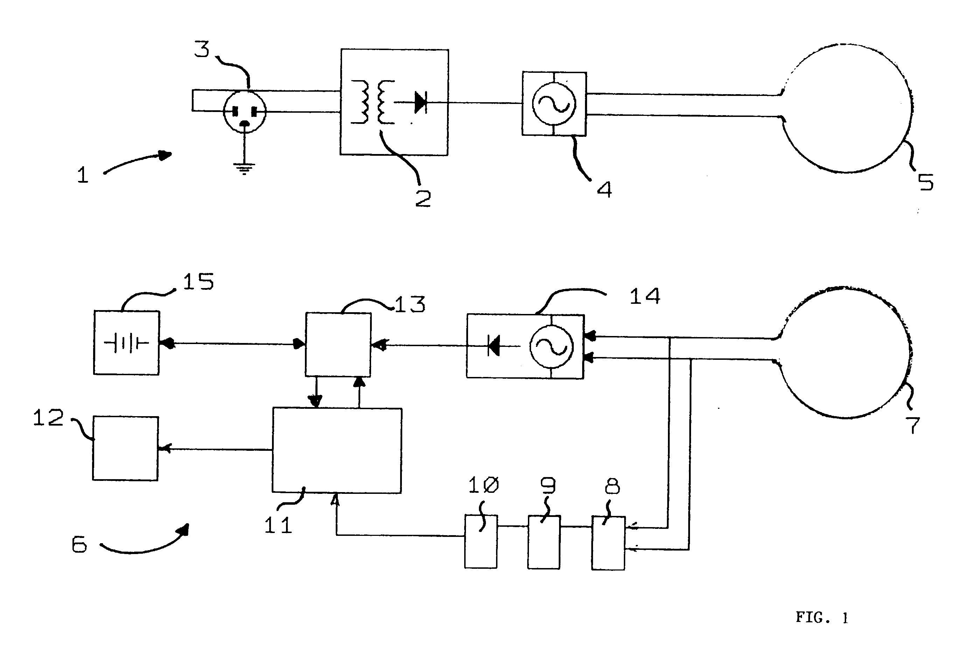

Dans la figure 1 on représente une vue schématique en plan d'une part la station fixe 1 et d'autre part le robot autonome 6. La station fixe 1 comprend un redresseur 2 connecté au réseau 3 de distribution 220V. Le courant continu alimente un circuit oscillateur 4 de 20 Kz relié à une boucle d'induction 5 placé quelques centimètres sous le sol.

Le robot autonome 6 comprend une boucle de réception 7, un circuit de détection composé lui-même d'un filtre 8, d'un amplificateur logarithmique 9 et d'un convertisseur analogique-digital 10, relié à un microprocesseur 11. Le microprocesseur est lui-même relié à l'unité de contrôle de direction 12 et de contrôle d'alimentation 13 connecté à la boucle de réception d'une part et à la batterie 15 d'autre part pour recharger cette dernière.

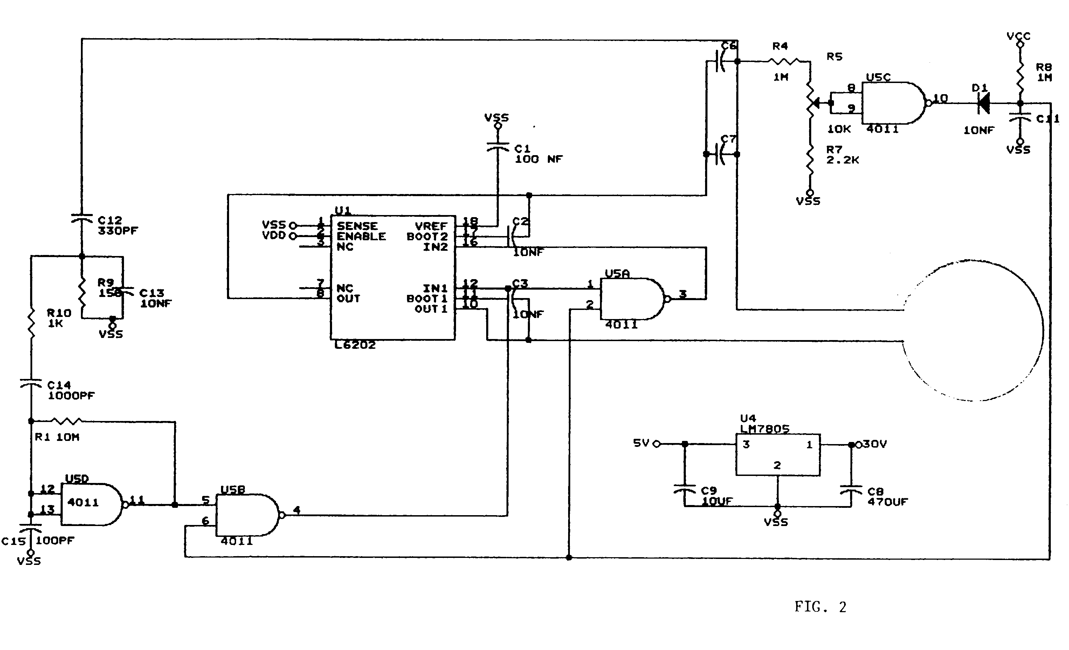

La fig. 2 représente schématiquement un exemple de réalisation du circuit oscillant émetteur selon le second mode de réalisation. Dans ce cas particulier, la fréquence de l'oscillateur est de 25 KHz, les diamètres des bobines de 20 cm, le nombre de spires de la station fixe est de 70 (diamètre du fil de 0,8 mm), le nombre de spire de la station mobile est de 14 cm. La distance entre les deux bobines lors de la recharge est de 4 cm. Le courant de charge est de 750 mA (correspondant à un temps de recharge moyen pour une batterie de 12 V , de 1 à 2 heures). La tension de charge est alors de 13,5 V.

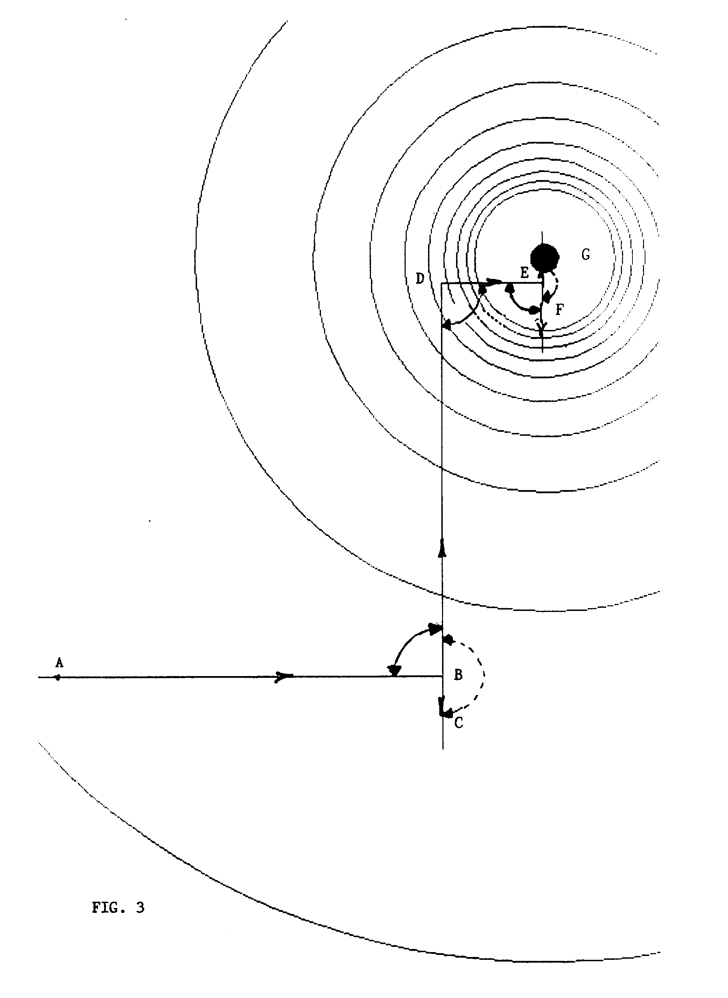

La fig. 3 est une vue en plan qui illustre les cercles d'égales intensité de champ ainsi que l'algorithme suivi par le robot autonome pour rejoindre la station fixe. Dans cet exemple, le robot arrive au point de recharge après 3 pivotements de 90°, avec deux fois une correction de 180° lorsque la direction suivie est opposée à celle menant au point d'alimentation. La trajectoire suivie passe successivement par les points A,B,C,B,D,E,F,E avant d'arriver à la station de recharge G.

L'invention n'est pas limitée aux modes de réalisation susmentionnés qui par ailleurs peuvent varier dans leurs détails et leurs constructions.

## Revendications

1. Système de réapprovisonnement énergétique pour engin mobile autonome (6) comprenant :
- une station essentiellement fixe (1) alimentée par une source extérieure (3) ;
- sur ou dans l'engin, une batterie rechargeable (15) et un système de répérage contrôlé par un microordinateur ;
- le microordinateur étant connecté au système de contrôle de l'avancement vers la station fixe lorsque le niveau de charge de la batterie descend en dessous d'un niveau prédéterminé caractérisé en ce que
- la station essentiellement fixe est constituée d'un générateur haute fréquence (4) et d'une bobine d'induction (5);
- une bobine réceptrice (7) et un dispositif de redressement du courant sont incorporés sur ou dans l'engin;
- le microordinateur (11) connecté au système de contrôle de l'avancement (12) de l'engin vers la station fixe (1), applique un algorithme partiellement ou totalement basé sur la mesure du gradient d'intensité de la réception des signaux à haute fréquence dudit générateur (4).

2. Système selon la revendication 1 caractérisé en ce que la boucle d'induction (5) de la bobine de la station fixe (1) et la boucle d'induction (7) de la bobine réceptrice sont toutes deux perpendiculaires au plan de déplacement de l'engin (6).

3. Système selon la revendication 1 caractérisé en ce que la boucle d'induction (5) de la bobine de la station fixe et la boucle d'induction (7) de la bobine réceptrice sont toutes deux parallèles au plan de déplacement de l'engin (6).

4. Système selon la revendication 3 caractérisé en ce que la boucle émettrice (5) se trouve au niveau ou sous le niveau du sol.

5. Système selon la revendication 3 caractérisé en ce que le microordinateur (11), par l'intermédiaire du système de contrôle de l'avancement (12), commande une rotation de 90° lorsque le gradient de champ descend en dessous d'une valeur prédéterminée et une rotation de 180° lorsque le gradient de champ est négatif.

6. Système de réapprovisionnement énergétique selon n'importe laquelle des revendications précédentes, caractérisé en ce que le dit engin mobile est constitué d'un robot automatique.

7. Système de réapprovisionnement énergétique selon la revendication 6, caractérisé en ce que le dit robot automatique est une tondeuse à gazon, un engin d'entretien de surface, un engin de surveillance ou un engin de manutention.

## Patentansprüche

1. System zur wiederaufladbaren Stromversorgung für bewegliche selbständige Geräte (6), das folgendes umfaßt:
- eine im wesentlichen feste Station (1), die von einer externen Quelle (3) versorgt wird;
- eine auf oder in dem Gerät angeordnete wiederaufladbare Batterie (15) und ein Meßsystem, das von einem Mikrocomputer kontrolliert wird;
- der Mikrocomputer ist mit einem System zur Steuerung der Annäherung an die feste Station, sofern der Ladungszustand der Batterie einen vorgegebenen Grenzwert unterschreitet, verbunden,
dadurch gekennzeichnet, daß
- die im wesentlichen feste Station aus einem Hochfrequenzgenerator (4) und einer Induktionsspule (5) besteht;
- eine Empfängerspule (7) und eine Vorrichtung zur Stromgleichrichtung in oder auf dem Gerät angeordnet sind;
- der Mikrocomputer (11), der mit dem System zur Steuerung der Annäherung (12) des Gerätes an die feste Station (1) verbunden ist, einen Algorithmus verwendet, der teilweise oder ganz auf einer Messung des Intensitätsgradienten des Empfangs des Hochfrequenzsignals aus dem genannten Generator (4) basiert.

2. System gemäß Anspruch 1, dadurch gekennzeichnet, daß der Induktionsring (5) der Spule der festen Station (4) und der Induktionsring (7) der Empfängerspule im wesentlichen senkrecht zur Bewegungsebene des Gerätes (6) angeordnet sind.

3. System gemäß Anspruch 1, dadurch gekennzeichnet, daß der Induktionsring (5) der Spule der festen Station (4) und der Induktionsring (7) der Empfängerspule im wesentlichen parallel zur Bewegungsebene des Gerätes (6) angeordnet sind.

4. System gemäß Anspruch 3, dadurch gekennzeichnet, daß sich der Sendering (5) in Höhe oder unterhalb des Erdbodens befindet.

5. System gemäß Anspruch 3, dadurch gekennzeichnet, daß der Mikrocomputer (11) mittels des Systems zur Annäherungssteuerung (12) eine Drehung um 90° veranlaßt, sofern der Gradient des Feldes unter einen vorgegebenen Wert absinkt, und eine Drehung um 180° veranlaßt sofern der Gradient des Feldes negativ ist.

6. System zur wiederaufladbaren Stromversorgung gemäß einem der vorgenannten Ansprüche, dadurch gekennzeichnet, daß das genannte mobile Gerät aus einem automatischen Roboter besteht.

7. System zur wiederaufladbaren Stromversorgung gemäß Anspruch 6, dadurch gekennzeichnet, daß der genannte automatische Roboter ein Rasenmäher, ein Gerät zur Oberflächenbehandlung, ein Überwachungsgerät oder ein Handhabungsgerät ist.

## Claims

1. System for resupplying power for a mobile self-contained device (6) comprising
- an essentially fixed station (1) supplied by an external source (3);
- on or in the device, a rechargeable battery and a positioning system controlled by a microcomputer;
- the microcomputer being connected to the drive control system of the device in the direction of the fixed station when the battery charge level drops below a predetermined level,
characterized in that :
- the essentially fixe station comprises a high frequency generator (4) and an induction coil (5);
- a pick-up coil (7) and a current rectifying device are incorporated on or in the device;
- the microcomputer (11) connected to the drive control system (12) of the device in direction of the fixed station (1), applies an algorithm partially or totally based on the measurement of the gradient of the intensity of received high frequency signals from said generator (4).

2. System according to claim 1 characterized in that the induction coil (5) of the bobbin of the fixed station (1) and the induction coil (7) of the receiving bobbin are both perpendicular to the plane of motion of the device (6)

3. System according to claim 1 characterized in that the induction coil (5) of the bobbin of the fixed station (1) and the induction coil (7) of the receiving bobbin are both parallel to the plane of motion of the device (6).

4. System according to claim 3 characterized in that the transmitting coil (5) is located at the level or under the ground.

5. System according to claim 3 characterized in that the microcomputer (11), by means of the drive control system (12), instructs a 90° rotation when the field gradient drops below a predetermined value and a rotation of 180° when the field gradient is negative.

6. System for resupplying power according any of the preceding claims characterised in that said mobile device is an automatic robot.

7. System for resupplying power according any of the preceding claims characterised in that said automatic robot is a lawnmower, a surface cleaning device, a monitoring device or a handling device.
